# EUROPEAN PATENT APPLICATION

(11) **EP 2 345 564 A1**
(43) Date of publication of application: **20.07.2011**
(21) Application number: 09179020.4
(22) Date of filing: 14.12.2009
(51) Int. Cl.: B60R 21/34

(54) **Airbag module**

(71) Applicant: Ford Global Technologies, LLC, Dearborn, MI 48126 (US)
(72) Inventor: von Eichwald, Tor, 422 43, Hisings Backa (SE); Bergenheim, Eddy, 426 69, Västra Frölunda (SE); Erlingfors, Mats, 44465, Jörlanda (SE); Hallneus, Gunnar, 41671, Göteborg (SE)
(74) Representative: Widahl, Jenny Marie

(57) **Abstract**

The present invention relates to an airbag module for a vehicle comprising:
- an inflatable airbag (5), adapted to be deployed along the windscreen (9) and/ or A-pillars of the vehicle,
- a housing (7) adapted to store the airbag (5), the housing (7) intended to be located under a bonnet (13) of the vehicle,
wherein the housing (7) comprises a guiding means, which after initiation of the deployment of the airbag, guides the airbag, such that the airbag deploys in the direction towards the windscreen and/ or A-pillars.
The invention further relates to a vehicle airbag system comprising an airbag module according to above and an at least partly deployable bonnet.

## Description

### TECHNICAL FIELD

The present invention relates to an airbag module for a vehicle. The invention further relates to a vehicle airbag system comprising an airbag module and an at least partly deployable bonnet.

### BACKGROUND OF THE INVENTION

If a vehicle, such as a car, is involved in an accident in which the front part of the vehicle hits a pedestrian or a cyclist, the pedestrian/ cyclist may be thrown towards the windscreen and/or the A-pillars. In order to reduce the severity of these accidents, it is well-known to use an inflatable airbag, which deploys and at least covers the windscreen and/or the A-pillars, so that the pedestrian/ cyclist instead hits the softer airbag. It is further well-known to use a deployable bonnet, e.g. by raising the rear part of the bonnet to an "impact position", so that the distance between the bonnet and the hard engine parts is increased.

During normal conditions, the inflatable airbag is stored in a housing under the bonnet of the vehicle. However, when a sensor system in the vehicle detects a potential collision risk with for example a pedestrian or cyclist, the airbag is deployed, i.e. inflated, in order to at least partly cover the windscreen and/or the A-pillars. It is important to secure that the airbag inflates in the desired direction towards the windscreen and/or the A-pillars, and that the airbag is prevented from instead deploying forwards under the bonnet. "Forwards" relates herein to the vehicle, meaning towards the front of the vehicle; the forward direction is thus the normal driving direction.

Document US 6,474,679 B2 by Miyasaka and Maki discloses a vehicle airbag system provided with an airbag that inflates and unfolds to cover an A-pillar. The system further comprises a deployable bonnet and the air bag expands out from the gap between the deployed bonnet and the windscreen. An upper guide, which prevents the airbag from arching up, is provided on the lower side of the rear end of the bonnet. The upper guide has an undulated shape, which helps to direct the flow of the gas inside the airbag. In the fourth embodiment, a connecting member spans between the upper surface of the housing to the vicinity of the rear end of the bonnet.

However, the upper guide and the optional connecting member have a complicated geometrical shape. They constitute parts of the bonnet, which has to be designed accordingly. There is therefore a desire to provide a less complicated arrangement being able to guide the airbag to deploy in the desired direction.

### SUMMARY OF THE INVENTION

The object of the present invention is to overcome or ameliorate at least one of the disadvantages of the prior art, or to provide a useful alternative.

It is desirable to provide an airbag and a vehicle airbag system adapted to guide the airbag to deploy in the desired direction.

The object above may be achieved by the invention according to claim 1.

In a first aspect of the present invention there is provided an airbag module for a vehicle comprising:
- an inflatable airbag, adapted to be deployed along the windscreen and/ or A-pillars of the vehicle,
- a housing adapted to store the airbag, the housing intended to be located under a bonnet of the vehicle,
wherein the housing comprises a guiding means, which after initiation of the deployment of the airbag, guides the airbag, such that the airbag deploys in the direction towards the windscreen and/ or A-pillars.

As an example, the deployment of the airbag may be initiated as a response to a sensor system in the vehicle detecting a potential collision risk with for example a pedestrian or cyclist. Under normal conditions, with the airbag being stored in the housing, the guiding means is not active as a guide, but, after initiation of the deployment of the airbag, the guiding means may be active guiding the deploying airbag.

The guiding means may have a permanent position for acting as a guide. Alternatively, the guiding means may be movable. It may move to a suitable position for guiding the deploying airbag. Alternatively, the guiding means may function as a guide during the movement.

Since the guiding means is comprised in the housing, a less complicated arrangement is provided as compared to prior art solutions, wherein the guide was comprised in for example the bonnet. According to the invention, it is possible to equip existing vehicle models with an airbag module, without having to change the design of the engine compartment or the bonnet. The design of the bonnet may further be entirely decoupled from also proving a guiding function for the deploying airbag.

The guiding means may be arranged such that it, after initiation of the deployment of the airbag, prevents the airbag from deploying forwards under the bonnet. "Forwards" relates herein to the vehicle, meaning towards the front of the vehicle. However, in order to cover the windscreen and/or the A-pillars, the airbag needs to be deployed in the rearward direction of the vehicle. Forward deployment does not contribute to this and is thus not desired. The guiding means may further be adapted to also prevent sideways deployment of the airbag. Further, the bonnet itself may also help guiding the deploying airbag in the desired direction.

In an embodiment, the guiding means moves, after initiation of the deployment of the airbag, between a resting position and a guiding position. The resting position is the normal state, which for example prevails when the vehicle stands still or runs normally, i.e. when the airbag is stored in the housing. When a deployment of the airbag is initiated, the guiding means moves to a guiding position, which is suitable for guiding the deploying airbag. The guiding means may be pushed to the guiding position by the deploying airbag. The guiding position may be a predefined position or a number of subsequent positions. The guiding means may in that case function as a guide during the movement.

In an embodiment, the guiding means guides the airbag during the at least first 10 milliseconds, preferably the at least first 20 milliseconds after initiation of the deployment of the airbag, such that the airbag deploys in the direction towards the windscreen and/ or A-pillars. These time spans indicate the first critical milliseconds. As long as the airbag of this embodiment is guided during these first critical milliseconds, so that it starts deploying in the desired direction, the airbag will continue to deploy in the desired direction, also without the help of the guiding means.

In an embodiment the housing comprises an openable lid and at least part of the guiding means is comprised in the openable lid. The lid is opened when the airbag deploys. The lid may be pushed open by the deployable airbag, or there may be separate means to open it. The whole lid may be formed as a guiding means. Alternatively, only part of the lid forms a guiding means, in that case preferably a central part of the lid.

At least part of the guiding means may be comprised in the front wall of the housing; the front wall is the wall directed towards the front of the vehicle. Further, the guiding means may constitute parts of both the lid and the front wall at the same time.

The lid may comprise a preformed weakening around at least part of the guiding means. The guiding means may then be separated from the rest of the lid, at deployment of the airbag, by breaking the lid along the weakenings.

If the guiding means is comprised in the openable lid, the above-mentioned resting position may correspond to the lid being closed.

The guiding means may comprise a reinforcement forming at least part of the guiding means. The reinforcement increases the stiffness of the guiding means. Thereby the movement of the guiding means may be controlled, such that the guiding means is in a position suitable for guiding the deploying airbag when needed. As mentioned above, the guiding position may also be a number of subsequent positions. Preferably, the stiffness of the reinforcement is adapted to achieve this effect.

The reinforcement may at least partly cover and/or be incorporated into the lid of the housing. It may be located on top of the lid or may be integrated into the lid. Part of the lid may be made of a thicker and/or stiffer material than the rest, for example a metal reinforcement comprised in a plastic lid. If the lid is made of a moulded plastic, elongated structures of the plastic may be formed in the lid at moulding.

In an embodiment, the reinforcement comprises a metal plate encircling the edge delimiting the lid from a front wall of the housing. Thereby, a part of the metal plate extends along the front wall and another part along the lid. The parts may be located on top of the front wall/ lid or may be integrated into the front wall/ lid. The metal plate provides the reinforcement.

In an embodiment, the airbag module further comprises a restraint means, which is attached to the housing and provides at least a temporary stop for the guiding means during deployment of the airbag. The restraint means facilitates keeping the guiding means in a position suitable for guiding the deploying airbag. As mentioned above, the guiding position may also be a number of subsequent positions. The restraint means may be a fixed stop or a flexible stop attached to the housing. By a flexible stop is meant that it stops the movement of the guiding means successively, possibly during energy absorption. Alternatively, the restraint means may be formed by straps maximizing how far the guiding means can move. Such straps may be attached between the guiding means and the housing. Before deploying the airbag, such straps may be stored in the housing together with the airbag itself.

If the guiding means is movable, the airbag module may further comprise at least one resilient means and/ or visco-elastic means controlling the movement of the guiding means during deployment of the airbag. Such resilient means and/ or visco-elastic means may be attached between the guiding means and the housing. The resilient means may for example be springs. The resilient means and/ or visco-elastic means controls the movement of the guiding means by providing a counteracting force. The size of the counter-acting force is suitable chosen, such that the guiding means is in a position suitable for guiding the deploying airbag when needed, i.e. during the first critical milliseconds. As mentioned above, the guiding position may also be a number of subsequent positions.

In a second aspect of the present invention there is provided a vehicle airbag system comprising an airbag module according to above and an at least partly deployable bonnet.

In an embodiment, the at least partly deployable bonnet comprises an abutment adapted to provide at least a temporary stop for the guiding means during deployment of the airbag. The stop may be fixed or flexible. The stop will facilitate positioning the guiding means in a position suitable for guiding the deploying airbag. As mentioned above, the guiding position may also be a number of subsequent positions, which for example is the case when the bonnet is moving upwards at the same time as the guiding means engages with the abutment. Since the deployable bonnet is moving upwards after initiation of the deployment of the airbag, so is also the abutment moving upwards and eventually it will get out of reach for the guiding means and no longer function as a stop. A temporary stop will however be enough, as long as the airbag is guided during the above-mentioned first critical milliseconds.

The abutment comprised in the bonnet may be a channel formed in the bonnet. Such a channel may be arranged at the underside of the bonnet. The channel may be intended for e.g. cabling to the nozzles of the windscreen washer fluid, fluid tubes and/or electrical cables.

The vehicle airbag system may further comprise a stopper, which is adapted to be attached to the engine compartment of the vehicle, in order to provide at least a temporary stop for the guiding means during deployment of the airbag. The stop may be fixed or flexible. The stopper facilitates keeping the guiding means in a position suitable for guiding the deploying airbag. As mentioned above, the guiding position may also be a number of subsequent positions. The localization of the attachment is therefore chosen so that the guiding means is kept in a position or subsequent positions suitable for guiding the deploying airbag while engaging with the stopper.

If the guiding means of the vehicle airbag system is movable, the vehicle airbag system may further comprise at least one resilient means and/ or visco-elastic means controlling the movement of the guiding means during deployment of the airbag. The at least one resilient means and/ or visco-elastic means is connected in one end to the guiding means and in the other end to a location in the engine compartment of the vehicle, to the at least partly deployable bonnet or to the housing. The resilient means and/ or visco-elastic means controls the movement of the guiding means by providing a counteracting force. The size of the counter-acting force is suitable chosen, such that the guiding means is in a position suitable for guiding the deploying airbag when needed, i.e. during the first critical milliseconds. As mentioned above, the guiding position may also be a number of subsequent positions.

### BRIEF DESCRIPTION OF THE DRAWINGS

The present invention will hereinafter be further explained by means of non-limiting examples with reference to the appended figures wherein:
- Fig. 1: shows a schematic overview of a vehicle equipped with an airbag module according to a first embodiment of the invention after deployment of the airbag;
- Fig. 2: shows the airbag module according to the first embodiment of the invention;
- Fig. 3: shows a schematic cross-sectional view of the airbag module of Fig. 2 during deployment;
- Fig. 4: shows a schematic cross-sectional view of a second embodiment of the invention during deployment;
- Fig. 5: shows a schematic cross-sectional view of a third embodiment of the invention during deployment;
- Fig. 6: shows a schematic cross-sectional view of a fourth embodiment of the invention during deployment;
- Fig. 7: shows a schematic cross-sectional view of a fifth embodiment of the invention during deployment.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

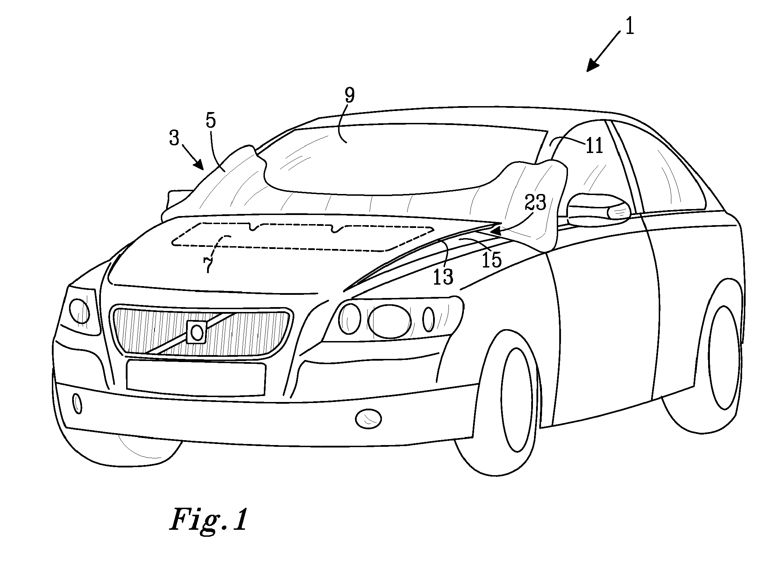

Figure 1 is a schematic overview of a vehicle 1 equipped with an airbag module 3 according to the invention. An airbag 5 is stored in a housing 7 during normal conditions. However, when a sensor system (not illustrated) in the vehicle detects a potential collision risk with for example a pedestrian or cyclist, the airbag 5 is deployed, i.e. inflated, as seen in the Figure 1. A purpose of the deployed airbag is to prevent the pedestrian/ cyclist from directly hitting the windscreen 9 and/or the A-pillars 11 of the vehicle. Instead the pedestrian/ cyclist impacts with the much softer airbag. Moreover, the same sensor system may also be used to initiate a deployment of the bonnet 13, i.e. rising the rear end of the bonnet 13. Thereby a clearance is provided between the bonnet 13 and the engine compartment 15, which clearance also helps to minimize the impact forces on a pedestrian/ cyclist hitting the bonnet 13, by providing an extra distance between the bonnet and hard parts in the engine compartment 15. Further, the deployed airbag 5 will in itself help to dampen such an impact on the bonnet 13, by being positioned partly under the bonnet 13. The airbag 5 deploys through the rear bonnet opening 23, which results from raising the rear end of the bonnet 13, towards the windscreen 9 and/or the A-pillars 11. The bonnet 13 is in American English often called the hood.

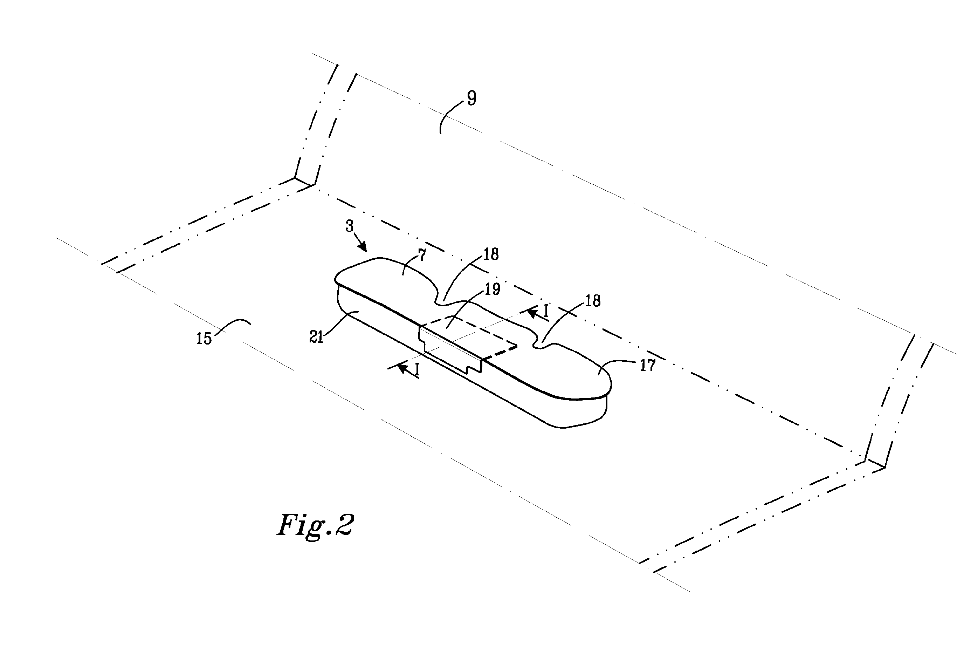

In Figure 2 a more detailed view of an airbag module 3 according to a first embodiment of the invention is illustrated. The housing 7 is formed, so that it fits in the engine compartment 15 under the bonnet 13. The shape of the housing has been adapted, such that its outer form gives space 18 for the drive mechanisms of the windscreen wipers. The housing has a lid 17, which for example is made of plastic. The central part of the lid has a reinforcement 19, here in the form of a metal plate encircling the edge 20 delimiting the lid 17 from a front wall 21 of the housing 7. The function of the reinforcement 19 is to stiffen that part of the lid. As an alternative, the reinforcement 19 may also be an integrated structure of the lid 17. In the illustrated embodiment, the lid 17 forms the guiding means. The airbag module 3 of Figure 2 is illustrated in its resting position, i.e. the airbag 5 being stored in the housing 7.

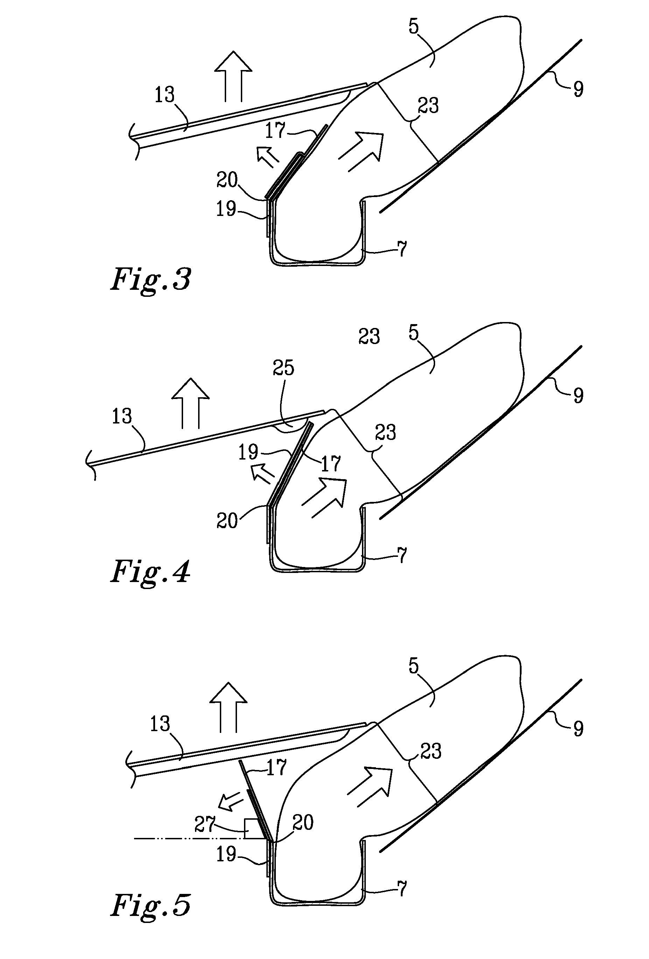

Figure 3 shows a cross-sectional view along the line I-I of the airbag module of Figure 2 during deployment of the airbag 5. The deployment normally occurs during a few milliseconds, purely as an example during about 5-20 milliseconds. As can be seen in Figure 3, the lid 17 of the housing 7 is being opened and the airbag 5 is being inflated. At the same time, the bonnet 13 is moving upwards, providing the expanding airbag 5 with an opening 23, through which the airbag 5 can deploy towards the windscreen and/or the A-pillars. As is further seen, the lid 17 is has been opened by the force of the expanding airbag 5 and is rotated around an imaginary rotational axis at the edge 20. Alternatively, the lid 17 may also be opened by separate means, such as pyrotechnical means.

The cross-sectional view also shows the reinforcement 19, which in this embodiment is incorporated into the lid 17. During the starting phase of the deployment, i.e. the first few milliseconds, the airbag 5 is steered towards the rear bonnet opening 23 by means of the guiding means, i.e. the lid 17. The lid 17 acts as a guide preventing the airbag 5 from deploying forwards in the vehicle under the bonnet 13. Further, the bonnet 13 itself may also help guiding the deploying airbag 5.

As an alternative (not illustrated), only the part of the lid 17 comprising the reinforcement 19 could function as a guiding means. In that case, the lid 17 may have a predetermined weakening surrounding at least part of the reinforcement. When the airbag is deployed, the lid 17 then breaks along the predetermined weakening in order to release the guiding means.

When a few milliseconds have passed, the bonnet 13 has reached its deployed position, the airbag 5 has been further inflated and the lid 17 has been further rotated around the imaginary rotational axis and no longer acts as a guide. However, at that time, no further guiding is needed for the airbag 5, since it already has achieved its desired deployment direction and it does not matter, if the lid 17 has been rotated further. The stiffness of the reinforcement 19 is preferably adapted, such that the lid 17 is in the desired position for acting as a guide for the inflating airbag 5, when the airbag 5 has been inflated to such a degree, that a guide is needed.

Figure 4 illustrates a second embodiment of the invention. The reinforcement 19 covers the whole cross-section of the lid 17. The bonnet 13 is provided with an abutment 25. The abutment 25 may be formed by a reinforcing structure of the bonnet 13, such as a beam close to the rear end of the bonnet 13 as in Figure 4. The abutment 25 may also be a separate unit, such as a channel arranged on the underside of the bonnet 13. Such a channel may be used for e.g. cabling to the nozzles of the windscreen washer fluid, fluid tubes and/or electrical cables. The channel may for example be made of metal or plastic.

The abutment 25 acts as a temporary stop for the lid 17. Also in this embodiment, the lid 17 forms the guiding means. In the illustrated position, the lid 17 is captured by the abutment 25. Since the reinforcement 19 covers the whole cross-section of the lid 17, it will be the reinforced part of the lid 17, which abuts against the abutment 25. In that position the lid 17 acts as a guide preventing the airbag 5 from deploying forwards in the vehicle under the bonnet 13. Depending on where the abutment is situated in relation to the rear end of the bonnet 13, the bonnet 13 itself may also help guiding the deploying airbag 5.

When the bonnet 13 moves further up, the lid 17 will pass by the abutment 25 and no longer be stopped. However, at that time, no further guiding by the guiding means is needed for the airbag 5, since it already has achieved its desired deployment direction. As an alternative (not illustrated), only the part of the lid 17 comprising the reinforcement 19 could function as a guiding means.

According to a third embodiment of the invention illustrated in Figure 5, the movement of the lid 17 is stopped by a stopper 27. In the stopped position, the lid 17 acts as a guide preventing the airbag 5 from deploying forwards in the vehicle under the bonnet 13. Further, the bonnet 13 itself may also help guiding the deploying airbag 5. The stopper 27 may be fastened to the housing 7 or it may be fastened in the engine compartment 15. It may provide either a temporary stop for the critical milliseconds described above or a permanent stop. The stopper 27 may provide a fixed stop or a flexible stop. The stopper 27 may be able to absorb at least part of the kinetic energy of the lid 17. As an alternative (not illustrated), only the part of the lid 17 comprising the reinforcement 19 could function as a guiding means, and in that case that part of the lid 17 will be stopped by the stopper 27.

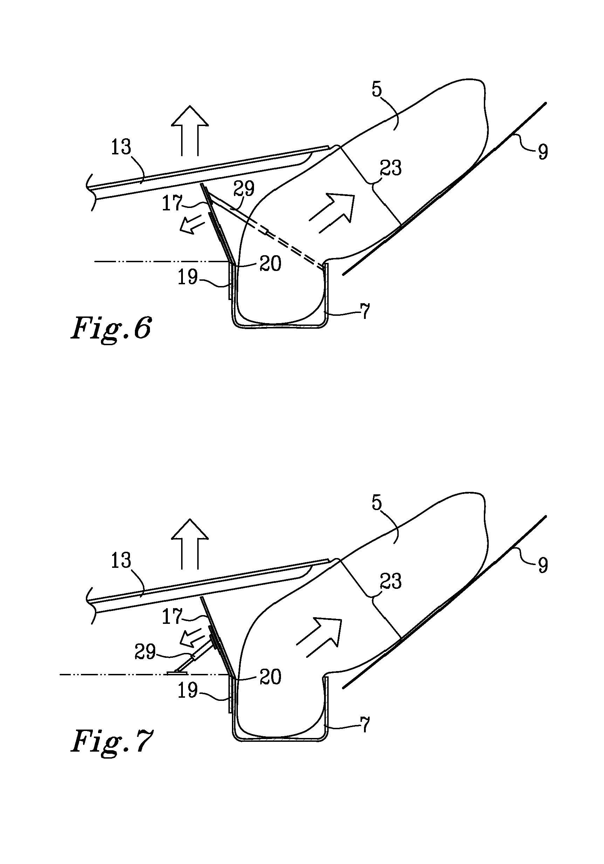

Figure 6 illustrates a fourth embodiment of the invention comprising a resilient means and/ or visco-elastic means 29 controlling the movement of the guiding means, here the lid 17, during deployment of the airbag 5. The resilient means and/ or visco-elastic means 29 is attached between the lid 17 and the housing 7 and controls the movement of the guiding means by providing a force counteracting the rotation of the lid 17 around the imaginary rotational axis at the edge 20. The size of the counter-acting force is suitable chosen, such that the guiding means will be in a position suitable for guiding the deploying airbag 5 when needed, e.g. during the first critical milliseconds. As mentioned above, the guiding position may also be a number of subsequent positions. Care should be taken when positioning the resilient means and/ or visco-elastic means 29, so that it does not disturb the deployment of the airbag 5. The resilient means and/ or visco-elastic means 29 may for example be attached at the lateral sides of the housing 7.

Figure 7 discloses a fifth embodiment of the invention comprising an alternative position for the resilient means and/ or visco-elastic means 29. In this embodiment, the resilient means and/ or visco-elastic means 29 forms a flexible stop, which is activated when the lid 17 has reached a predetermined rotational position. The stop may be able to absorb at least part of the kinetic energy of the lid 17. One end of the resilient means and/ or visco-elastic means 29 is attached to a localization in the engine compartment 15 and the other end to a surface, which engages with the lid 17, once the lid 17 has reached the predetermined rotational position. In this embodiment, the resilient means and/ or visco-elastic means 29 is shortened during the further rotation of the lid 17 around the imaginary rotational axis.

In both the fourth and fifth embodiments, the resilient means and/ or visco-elastic means 29 may be used together with a reinforcement 19 or instead of a reinforcement 19.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Especially, any of the suggested arrangements for the guiding means may be combined with any of the means to position the guiding means in a favourable position for guiding the airbag. Moreover, in any of the illustrated embodiments, the guiding means may constitute only part of the lid 17. Further, even if the illustrated embodiments disclose the use of reinforcements 19, the guiding means may just as well be made without reinforcements. Also for all embodiments, the guiding means may be comprised in the lid 17, form part/s of the lid 17 or the whole lid 17 may constitute the guiding means.

## Claims

1. An airbag module (3) for a vehicle (1) comprising
- an inflatable airbag (5), adapted to be deployed along the windscreen (9) and/ or A-pillars (11) of said vehicle (1),
- a housing (7) adapted to store said airbag (5), said housing (7) intended to be located under a bonnet (13) of said vehicle (1),
**characterized by**
said housing (7) comprising a guiding means, which after initiation of the deployment of said airbag (5), guides said airbag (5), such that said airbag (5) deploys in the direction towards the windscreen (9) and/ or A-pillars (11).

2. The airbag module (3) according to claim 1, wherein said guiding means after initiation of the deployment of said airbag (5), moves between a resting position and a guiding position.

3. The airbag module (3) according to claim 1 or 2, wherein said guiding means, after initiation of the deployment of said airbag (5), prevents said airbag (5) from deploying forwards under said bonnet (13).

4. The airbag module (3) according to any one of the preceding claims, wherein said guiding means guides said airbag (5) during the at least first 10 milliseconds, preferably the at least first 20 milliseconds after initiation of the deployment of said airbag (5), such that said airbag (5) deploys in the direction towards the windscreen (9) and/ or A-pillars (11).

5. The airbag module (3) according to any one of the preceding claims, wherein said housing (7) comprises an openable lid (17) and at least part of said guiding means is comprised in said openable lid (17).

6. The airbag module (3) according to any one of the preceding claims, wherein said guiding means comprises a reinforcement (19) forming at least part of said guiding means.

7. The airbag module (3) according to claim 6, wherein the lid (17) of said housing (7) further comprises a preformed weakening around at least part of said guiding means.

8. The airbag module (3) according to claim 6 or 7, wherein the reinforcement (19) comprises a metal plate encircling the edge (20) delimiting the lid (17) from a front wall (21) of said housing (7).

9. The airbag module (3) according to any one of the preceding claims, wherein said airbag module (3) further comprises a restraint means, said restraint means being attached to said housing (7) and providing at least a temporary stop for said guiding means during deployment of said airbag (5).

10. The airbag module (3) according to any one of the preceding claims, said airbag module (3) further comprising at least one resilient means and/ or visco-elastic means (29) controlling the movement of said guiding means during deployment of said airbag (5).

11. A vehicle airbag system comprising
- an airbag module (3) according to any one of the preceding claims,
- an at least partly deployable bonnet (13).

12. The vehicle airbag system according to claim 11, wherein said at least partly deployable bonnet (13) comprises an abutment (25) adapted to provide at least a temporary stop for the guiding means during deployment of said airbag (5).

13. The vehicle airbag system according to claim 12, wherein a channel is formed in said at least partly deployable bonnet (13), said channel forming said abutment (25).

14. The vehicle airbag system according to any one of claims 11 to 13, wherein said vehicle airbag system further comprises a stopper (27), said stopper (27) being adapted to be attached to the engine compartment (15) of said vehicle (1) in order to provide at least a temporary stop for said guiding means during deployment of said airbag (5).

15. The vehicle airbag system according any one of the preceding claims, wherein said vehicle airbag system further comprises at least one resilient means and/ or visco-elastic means (29) controlling the movement of said guiding means during deployment of said airbag (5), said at least one resilient means and/ or visco-elastic means (29) being connected in one end to said guiding means and in the other end to a location in the engine compartment (15) of said vehicle (1), to said at least partly deployable bonnet (13) or to said housing (7).
